# EUROPEAN PATENT APPLICATION

(11) **EP 4 803 338 A1**
(43) Date of publication of application: **09.09.2026**
(21) Application number: 24884096.9
(22) Date of filing: 07.08.2024
(51) Int. Cl.: B60K 6/36, B60K 6/26, B60K 6/38, B60L 15/20

(54) **HYBRID POWER SYSTEM AND VEHICLE HAVING SAME**

(30) Priority: 31.10.2023 CN 202311438591
(71) Applicant: BYD Company Limited, Shenzhen, Guangdong 518118 (CN)
(72) Inventor: GAO, Jun, Shenzhen, Guangdong 518118 (CN); ZHANG, Jiahao, Shenzhen, Guangdong 518118 (CN); CUI, Xianjue, Shenzhen, Guangdong 518118 (CN); ZHANG, Yisheng, Shenzhen, Guangdong 518118 (CN); MA, Minghui, Shenzhen, Guangdong 518118 (CN)
(74) Representative: Mathys & Squire
(86) International application number: PCT/CN2024/110310
(87) International publication number: WO 2025/092089

(57) **Abstract**

A vehicle, the vehicle comprises a hybrid power system, and the hybrid power system comprises an engine, a longitudinally mounted first electric motor, a longitudinally mounted second electric motor and a first coupling apparatus. The hybrid power system is configured to: when in a first state, disconnect the engine from the longitudinally mounted first electric motor by means of the first coupling apparatus, and to control the longitudinally mounted first electric motor and the longitudinally mounted second electric motor to jointly drive the vehicle.

## Description

### CROSS-REFERENCE TO RELATED APPLICATIONS

The present application claims priority to Chinese Patent Application No. 202311438591.6 filed on October 31, 2023, entitled "Hybrid Power System and Vehicle Having the Same", which is incorporated herein by reference in its entirety.

### FIELD

The present application relates to the field of vehicle technology, and in particular to a hybrid power system and a vehicle having the same.

### BACKGROUND

With the development of economies, new energy vehicles have occupied an increasing share in the market, and hybrid technology is becoming a research focus of various automobile enterprises. Currently, most hybrid powertrains are transversely mounted, but longitudinally mounted powertrains have more advantages in vehicle models such as pickup trucks and off-road vehicles.

In the related art, a longitudinal hybrid power system usually includes an engine, a generator, a drive motor, a clutch, a synchronizer, etc., which can realize two-speed driving of the longitudinally mounted engine. However, the above-mentioned longitudinal hybrid power system cannot realize dual-motor (generator + drive motor) driving, resulting in poor power performance of the hybrid vehicle under pure electric working conditions, affecting the user's driving experience.

### DISCLOSURE

The present application is intended to resolve one of technical problems in the related art at least to some extent. To this end, one object of the present application is to provide a hybrid power system, which can realize dual-motor driving, so that the entire vehicle has better power performance and more excellent acceleration performance, and it is conducive to improving user's driving experience.

Another object of the present application is to provide a vehicle having the above-mentioned hybrid power system.

To achieve the above objects, according to a first aspect of the present application, a hybrid power system is provided, comprising: an engine; a longitudinally mounted first electric motor; a longitudinally mounted second electric motor; and a first coupling apparatus; the hybrid power system being configured to: when in a first state, disconnect the engine from the longitudinally mounted first electric motor by means of the first coupling apparatus, and to control the longitudinally mounted first electric motor and the longitudinally mounted second electric motor to jointly drive the vehicle.

The hybrid power system according to the embodiment of the present application can realize dual-motor driving, so that the entire vehicle has better power performance and more excellent acceleration performance, and it is conducive to improving user's driving experience.

According to some embodiments of the present application, the longitudinally mounted first electric motor and the longitudinally mounted second electric motor are configured to: determine the working states of the longitudinally mounted first electric motor and the longitudinally mounted second electric motor according to vehicle drive demand information, a target first efficiency map corresponding to the longitudinally mounted first electric motor, and a target second efficiency map corresponding to the longitudinally mounted second electric motor.

According to some embodiments of the present application, the longitudinally mounted first electric motor and the longitudinally mounted second electric motor are configured to: when a torque demand corresponding to the vehicle drive demand information falls within the torque range corresponding to the target first efficiency map corresponding to the longitudinally mounted first electric motor, control the longitudinally mounted first electric motor to independently drive the vehicle; when a torque demand corresponding to the vehicle drive demand information falls within the torque range corresponding to the target second efficiency map corresponding to the longitudinally mounted second electric motor, to control the longitudinally mounted second electric motor to independently drive the vehicle.

According to some embodiments of the present application, the longitudinally mounted first electric motor and the longitudinally mounted second electric motor are configured to: when a torque demand corresponding to the vehicle drive demand information exceeds the torque range corresponding to the target first efficiency map and also exceeds the torque range corresponding to the target second efficiency map, but does not exceed the torque range corresponding to the sum of the target first efficiency map and the target second efficiency map, control the longitudinally mounted first electric motor and the longitudinally mounted second electric motor to jointly drive the vehicle.

According to some embodiments of the present application, the longitudinally mounted first electric motor and the longitudinally mounted second electric motor are configured such that: when the longitudinally mounted first electric motor and the longitudinally mounted second electric motor jointly drive the vehicle, the one with larger power between the longitudinally mounted first electric motor and the longitudinally mounted second electric motor outputs a maximum torque.

According to some embodiments of the present application, the hybrid power system further comprises: a transmission, the transmission being respectively connected to the longitudinally mounted first electric motor, the longitudinally mounted second electric motor and the first coupling apparatus; and a second coupling apparatus, a first end of the second coupling apparatus being connected to the longitudinally mounted first electric motor, and a second end of the second coupling apparatus being connected to the transmission; wherein, the second coupling apparatus is configured to: when in a decoupled state, disconnect the connection between the longitudinally mounted first electric motor and the transmission.

According to some embodiments of the present application, the first coupling apparatus and the second coupling apparatus are arranged on the same shaft; or, the first coupling apparatus and the second coupling apparatus are arranged on different shafts.

According to some embodiments of the present application, the hybrid power system further comprises: a power input shaft; and a first transmission gear. The first transmission gear is arranged on the power input shaft, and the first transmission gear is respectively connected to the longitudinally mounted first electric motor and the second coupling apparatus.

According to some embodiments of the present application, the hybrid power system comprises: a first gear pair; a second gear pair; and a shifting device. The shifting device is configured to control the power from the power source to switch from a first gear state flowing through the first gear pair to a second gear state flowing through the second gear pair.

According to some embodiments of the present application, the shifting device comprises a synchronizer, which is arranged on the power input shaft or the power output shaft.

According to some embodiments of the present application, the shifting device comprises two one-way clutches, which are arranged on different shafts.

According to some embodiments of the present application, the two one-way clutches are arranged in a staggered configuration.

According to some embodiments of the present application, the shifting device comprises two one-way clutches, which are arranged back-to-back on the power input shaft or the power output shaft.

According to some embodiments of the present application, the shifting device comprises a dual clutch, which is arranged on the power input shaft or the power output shaft.

According to some embodiments of the present application, the dual clutch is located at an end of the power output shaft or the power input shaft.

According to some embodiments of the present application, the hybrid power system further comprises: a second transmission gear. The second transmission gear is arranged on the power input shaft or the power output shaft, and the second transmission gear is respectively connected to the longitudinally mounted second electric motor and the transmission.

According to some embodiments of the present application, the hybrid power system further comprises: a differential, which has a first bevel gear; and a differential power input shaft, the differential power input shaft is provided with a second bevel gear, and the first bevel gear meshes with the second bevel gear.

According to some embodiments of the present application, a central axis of the first bevel gear is perpendicular to a central axis of the second bevel gear.

According to some embodiments of the present application, the hybrid power system further comprises: a transmission, the transmission being respectively connected to the longitudinally mounted first electric motor, the longitudinally mounted second electric motor and the first coupling apparatus; wherein, the hybrid power system is configured to: when in a second state, disconnect the connection between the engine and the longitudinally mounted first electric motor and to disconnect the connection between the engine and the transmission by means of the first coupling apparatus, and the power of the longitudinally mounted first electric motor and the power of the longitudinally mounted second electric motor are coupled at the transmission to drive the vehicle.

According to some embodiments of the present application, the transmission has a plurality of gears; the hybrid power system is configured to: when in a second state, adjust a transmission ratio of the power of at least the longitudinally mounted first electric motor among the longitudinally mounted first electric motor and the longitudinally mounted second electric motor through different gears of the transmission.

According to some embodiments of the present application, the transmission has a plurality of gears; the hybrid power system is configured to: when in a third state, disconnect the connection between the engine and the longitudinally mounted first electric motor and the connection between the engine and the transmission by means of the first coupling apparatus, to control the power of the longitudinally mounted second electric motor to drive the vehicle through the transmission, and to adjust a transmission ratio of the power of the longitudinally mounted second electric motor through different gears of the transmission.

According to some embodiments of the present application, the transmission has a plurality of gears; the hybrid power system is configured to: when in a fourth state, couple the connection between the engine and the longitudinally mounted first electric motor by means of the first coupling apparatus, to disconnect the connection between the transmission and the longitudinally mounted first electric motor, to control the power of the engine to be transmitted to the longitudinally mounted first electric motor through the first coupling apparatus. The longitudinally mounted first electric motor generates electricity and transmits the generated electric energy to the longitudinally mounted second electric motor, the power of the longitudinally mounted second electric motor participates in driving through the transmission, and the transmission ratio of the power of the longitudinally mounted second electric motor is adjusted through different gears of the transmission.

According to some embodiments of the present application, the transmission has a plurality of gears; the hybrid power system is configured to: when in a fifth state, couple the connection between the engine and the transmission by means of the first coupling apparatus, to control the power of the engine to be transmitted to the transmission through the first coupling apparatus. The power of the engine and the power of the longitudinally mounted second electric motor are coupled at the transmission to drive the vehicle, and the transmission ratio of the power of at least the engine among the engine and the longitudinally mounted second electric motor is adjusted through different gears of the transmission.

According to some embodiments of the present application, the hybrid power system is configured to: when in a sixth state, disconnect the connection between the engine and the longitudinally mounted first electric motor and the connection between the engine and the transmission by means of the first coupling apparatus, to control a braking force to be transmitted to the longitudinally mounted first electric motor and/or the longitudinally mounted second electric motor through the transmission, and the longitudinally mounted first electric motor and/or the longitudinally mounted second electric motor recover energy by generating electricity.

According to a second aspect of the present application, a vehicle is provided, comprising: a hybrid power system according to the first aspect of the present application.

The vehicle according to the embodiment of the second aspect of the present application, by using the hybrid power system according to the embodiment of the first aspect of the present application, can realize dual-motor driving, so that the entire vehicle has better power performance and more excellent acceleration performance, and it is conducive to improving user's driving experience.

The additional aspects and advantages of the present application are partially provided in the following descriptions, some of which will become apparent from the following descriptions, or may be learned from practices of the present application.

### BRIEF DESCRIPTION OF THE DRAWINGS

The above and/or additional aspects and advantages of the present application will become apparent and easily understood from the description of the embodiments in conjunction with the following drawings, in which:
FIG. 1 is a schematic diagram of a hybrid power system according to a first embodiment of the present application;
FIG. 2 is a schematic diagram of a hybrid power system according to a second embodiment of the present application;
FIG. 3 is a schematic diagram of a hybrid power system according to a third embodiment of the present application;
FIG. 4 is a schematic diagram of a hybrid power system according to a fourth embodiment of the present application;
FIG. 5 is a schematic diagram of a hybrid power system according to a fifth embodiment of the present application;
FIG. 6 is a schematic diagram of a hybrid power system according to a sixth embodiment of the present application;
FIG. 7 is a schematic diagram of a hybrid power system according to a seventh embodiment of the present application;
FIG. 8 is a schematic diagram of a hybrid power system in an engine direct drive first gear mode according to the embodiment of the present application;
FIG. 9 is a schematic diagram of a hybrid power system in an engine direct drive second gear mode according to the embodiment of the present application;
FIG. 10 is a schematic diagram of a hybrid power system in a single-motor drive first gear mode according to the embodiment of the present application;
FIG. 11 is a schematic diagram of a hybrid power system in a single-motor drive second gear mode according to the embodiment of the present application;
FIG. 12 is a schematic diagram of a hybrid power system in a series first gear mode according to the embodiment of the present application;
FIG. 13 is a schematic diagram of a hybrid power system in a series second gear mode according to the embodiment of the present application;
FIG. 14 is a schematic diagram of a hybrid power system in a parallel first gear mode according to the embodiment of the present application;
FIG. 15 is a schematic diagram of a hybrid power system in a parallel second gear mode according to the embodiment of the present application;
FIG. 16 is a schematic diagram of a hybrid power system in a dual-motor drive first gear mode according to the embodiment of the present application;
FIG. 17 is a schematic diagram of a hybrid power system in a dual-motor drive second gear mode according to the embodiment of the present application;
FIG. 18 is a schematic diagram of a hybrid power system in an energy recovery mode according to the embodiment of the present application;
FIG. 19 is a flow chart of a hybrid power system in a first state according to the embodiment of the present application;
FIG. 20 is a flow chart of determining the working states of the longitudinally mounted first electric motor and the longitudinally mounted second electric motor of the hybrid power system according to the embodiment of the present application;
FIG. 21 is a flow chart of controlling the longitudinally mounted first electric motor to independently drive the vehicle by the hybrid power system according to the embodiment of the present application;
FIG. 22 is a flow chart of controlling the longitudinally mounted second electric motor to independently drive the vehicle by the hybrid power system according to the embodiment of the present application;
FIG. 23 is a flow chart of controlling the longitudinally mounted first electric motor and the longitudinally mounted second electric motor to jointly drive the vehicle by the hybrid power system according to the embodiment of the present application;
FIG. 24 is a flow chart of controlling the one with larger power between the longitudinally mounted first electric motor and the longitudinally mounted second electric motor to output the maximum torque by the hybrid power system according to the embodiment of the present application;
FIG. 25 is a flow chart of a hybrid power system in a second state according to the embodiment of the present application;
FIG. 26 is a flow chart of a hybrid power system in a third state according to the embodiment of the present application;
FIG. 27 is a flow chart of a hybrid power system in a fourth state according to the embodiment of the present application;
FIG. 28 is a flow chart of a hybrid power system in a fifth state according to the embodiment of the present application;
FIG. 29 is a flow chart of a hybrid power system in a sixth state according to the embodiment of the present application;
FIG. 30 is a schematic block diagram of a vehicle according to an embodiment of the present application.

### Reference numerals:

Vehicle 1000,
Hybrid power system 100,
Engine 1, First coupling apparatus 2, Longitudinally mounted first electric motor 3, Transmission 4, First gear pair 41, First gear driving gear 411, First gear driven gear 412, Second gear pair 42, Second gear driving gear 421, Second gear driven gear 422, Shifting device 43, Synchronizer 431, One-way clutch 432, Dual clutch 433, Longitudinally mounted second electric motor 5, First driving gear 6, First transmission gear 7, Power input shaft 8, Power output shaft 9, Second coupling apparatus 10, Second driven gear 11, Second driving gear 12, Second transmission gear 13, Secondary driving gear 14, Secondary driven gear 15, Differential 16, First bevel gear 161, Differential power input shaft 17, Second bevel gear 18.

### DETAILED DESCRIPTION

Embodiments of the present application are described in detail below, and the embodiments described with reference to the accompanying drawings are exemplary.

In the description of the present application, it will be understood that the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential" and the like indicate orientations or positional relationships based on the orientations or positional relationships shown in the drawings, which are only for the convenience of describing the present application and simplifying the description, and do not indicate or imply that the referred device or element must have a specific orientation, be constructed and operated in a specific orientation, and thus will not be construed as a limitation on the present application.

In the description of the present application, "first feature" and "second feature" may include one or more of the features.

In the description of the present application, the meaning of "plurality" is two or more.

In the description of the present application, the meaning of a first feature being "above" or "below" a second feature may include that the first feature and the second feature are in direct contact, or may include that the first feature and the second feature are not in direct contact but are in contact with each other via another feature therebetween.

In the description of the present application, the meaning of a first feature being "above", "over" and "on" a second feature includes that the first feature is directly above and obliquely above the second feature, or simply indicates that the horizontal height of the first feature is higher than that of the second feature.

A hybrid power system 100 according to an embodiment of the present application is described below with reference to the accompanying drawings.

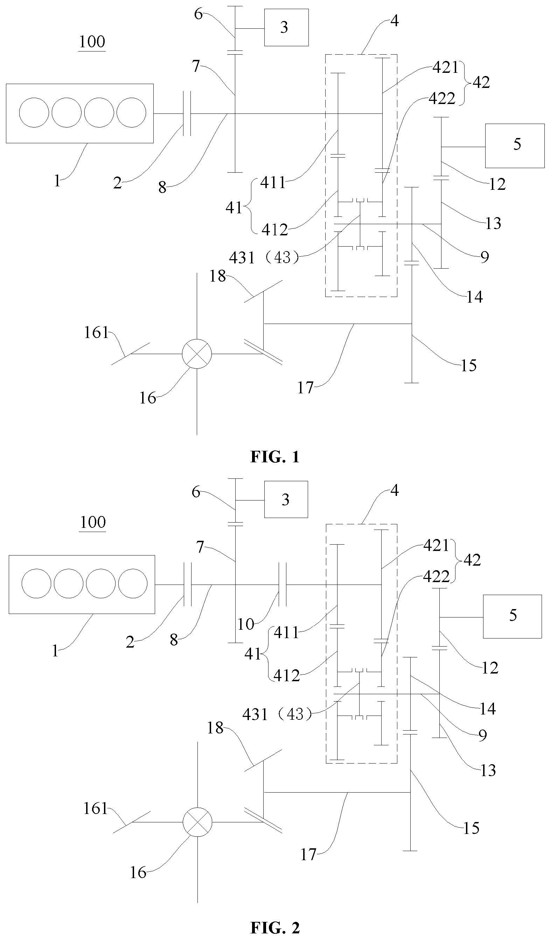

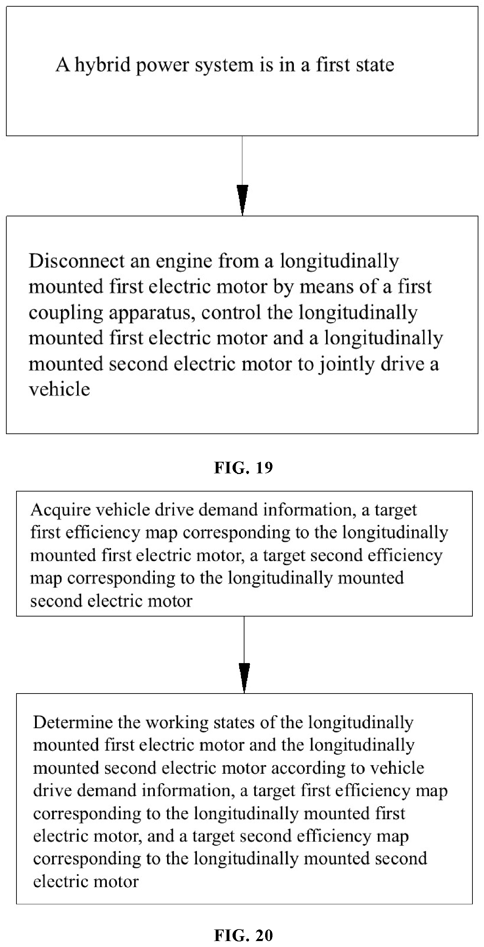

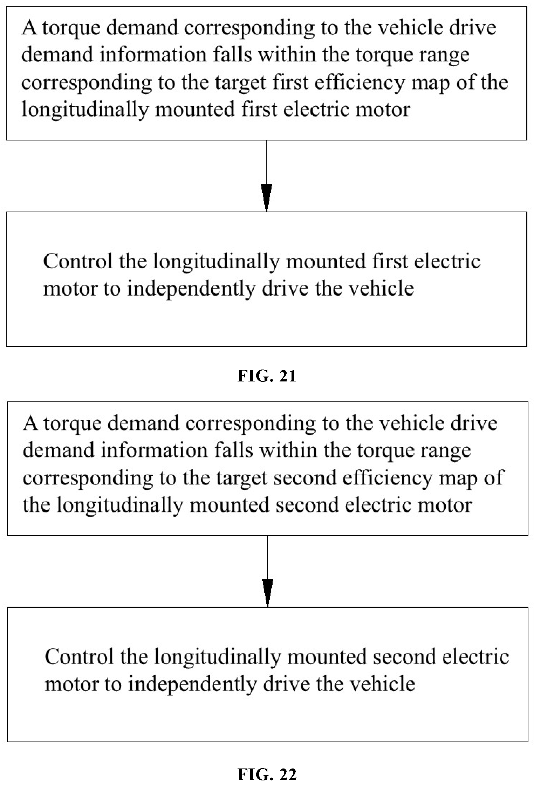

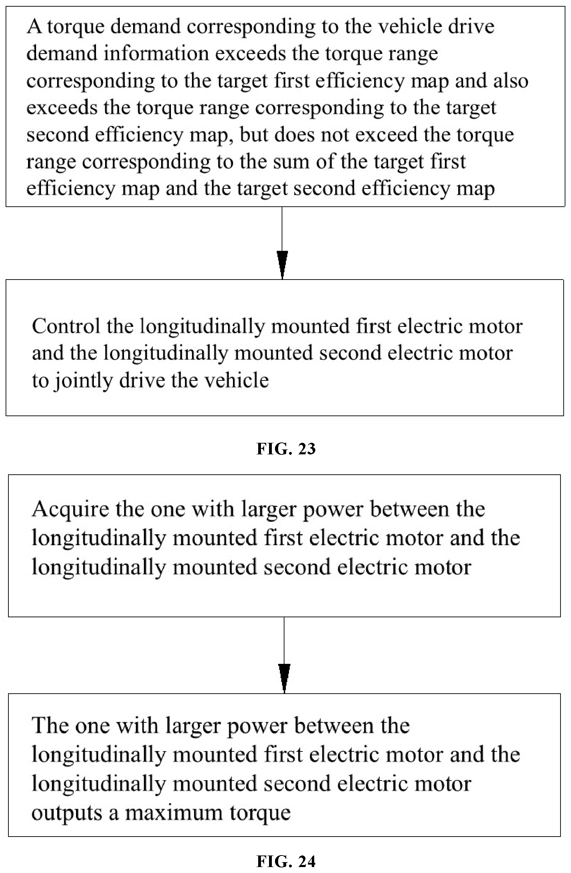

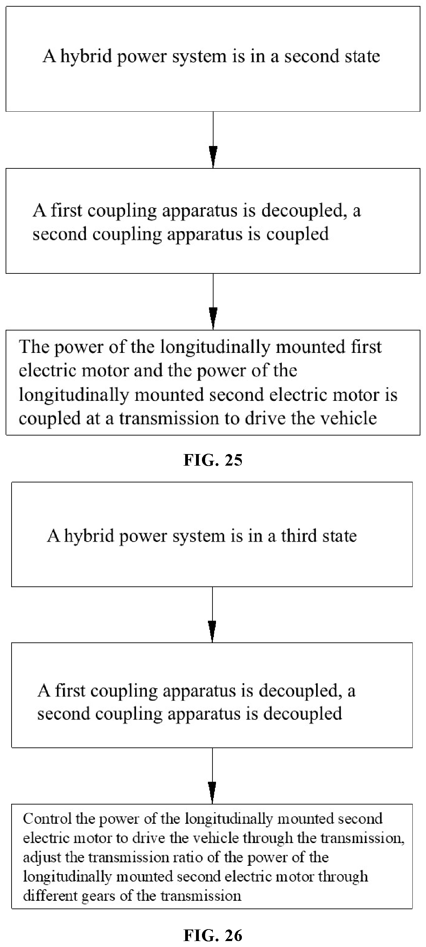

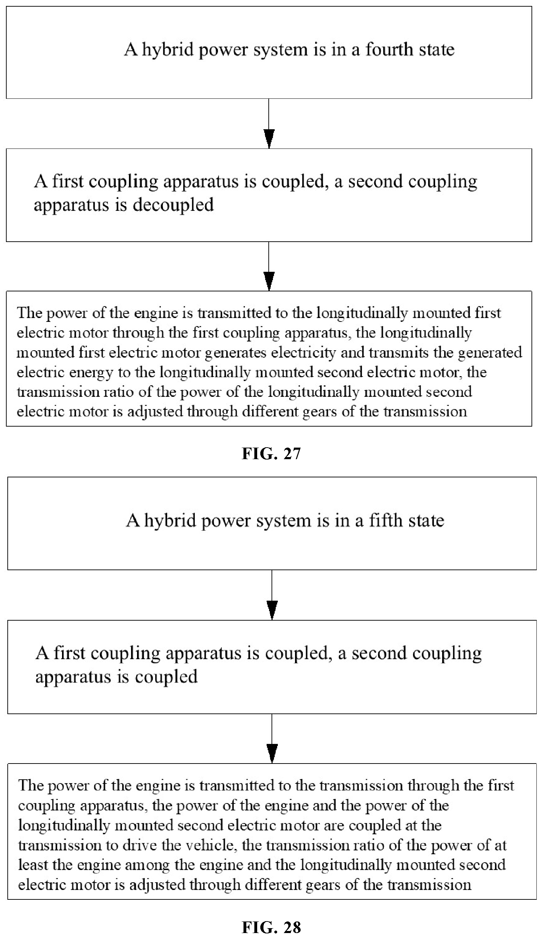

As shown in FIGs. 1 to 29, the hybrid power system 100 according to the embodiment of the present application comprises an engine 1, a longitudinally mounted first electric motor 3, a longitudinally mounted second electric motor 5 and a first coupling apparatus 2.

The hybrid power system 100 is configured to: when in a first state, disconnect the connection between the engine 1 and the longitudinally mounted first electric motor 3 by means of the first coupling apparatus 2, and to control the longitudinally mounted first electric motor 3 and the longitudinally mounted second electric motor 5 to jointly drive the vehicle.

For example, the first coupling apparatus 2 may be a wet clutch, an electromagnetic clutch or a one-way clutch, but is not limited thereto. The first coupling apparatus 2 may be arranged between the engine 1 and the longitudinally mounted first electric motor 3, the longitudinally mounted first electric motor 3 may be a generator, and the longitudinally mounted second electric motor 5 may be a drive motor.

The hybrid power system 100 according to the embodiment of the present application, when in the first state, is configured to disconnect the connection between the engine 1 and the longitudinally mounted first electric motor 3 by means of the first coupling apparatus 2 and to control the longitudinally mounted first electric motor 3 and the longitudinally mounted second electric motor 5 to jointly drive the vehicle, such that, when the hybrid power system 100 is in the first state, the first coupling apparatus 2 is in a decoupled state, the first coupling apparatus 2 can disconnect the connection between the longitudinally mounted first electric motor 3 and the engine 1 at this time, the power of the engine 1 cannot be transmitted to the wheels, the longitudinally mounted first electric motor 3 and the longitudinally mounted second electric motor 5 work under the drive of electric energy, and the rotational speeds and torques of the longitudinally mounted first electric motor 3 and the longitudinally mounted second electric motor 5 can be transmitted to the wheels to ensure the driving of the vehicle, so that the longitudinally mounted first electric motor 3 and the longitudinally mounted second electric motor 5 can participate in driving as needed, thereby realizing the operation of the vehicle in pure electric mode and realizing dual-motor (i.e., the longitudinally mounted first electric motor 3 + the longitudinally mounted second electric motor 5) driving, which is conducive to improving the power performance of the entire vehicle, making the acceleration performance of the vehicle more excellent and improving user's driving experience.

In addition, when the longitudinally mounted first electric motor 3 and the longitudinally mounted second electric motor 5 jointly drive the vehicle, the connection between the engine 1 and the longitudinally mounted first electric motor 3 is disconnected by means of the first coupling apparatus 2, so that the power transmission of the engine 1 and the longitudinally mounted first electric motor 3 will not interfere with each other, and the power drive of the hybrid power system 100 is smoother.

Of course, the first coupling apparatus 2 may also be in a coupled state, at this time, the longitudinally mounted first electric motor 3 is connected to the engine 1, and then the vehicle can be driven by the engine 1, and the engine 1 can drive the longitudinally mounted first electric motor 3 to operate, and the longitudinally mounted first electric motor 3 can generate electricity and store the electric energy in a power battery or provide electric energy for the longitudinally mounted second electric motor 5 to ensure the normal driving of the vehicle.

Therefore, the hybrid power system 100 according to the embodiment of the present application can realize dual-motor driving, so that the entire vehicle has better power performance and more excellent acceleration performance, and it is conducive to improving user's driving experience.

In some specific embodiments of the present application, the longitudinally mounted first electric motor 3 and the longitudinally mounted second electric motor 5 are configured to: determine the working states of the longitudinally mounted first electric motor 3 and the longitudinally mounted second electric motor 5 according to vehicle drive demand information, a target first efficiency map corresponding to the longitudinally mounted first electric motor 3, and a target second efficiency map corresponding to the longitudinally mounted second electric motor 5. In this way, it can be ensured that the longitudinally mounted first electric motor 3 and the longitudinally mounted second electric motor 5 maintain a highly efficient operational state as much as possible, which is conducive to improving the working efficiency of the longitudinally mounted first electric motor 3 and the longitudinally mounted second electric motor 5, so as to save energy consumption and improve the power performance of the hybrid power system 100 during dual-motor driving, so that the acceleration performance of the vehicle is more excellent.

A map corresponding to a motor refers to an ignition control curve, which mainly reflects the distribution of motor efficiency under different rotational speeds and torques, that is, it can be understood as an efficiency distribution map.

Furthermore, the longitudinally mounted first electric motor 3 and the longitudinally mounted second electric motor 5 are configured to: when a torque demand corresponding to the vehicle drive demand information falls within the torque range corresponding to the target first efficiency map corresponding to the longitudinally mounted first electric motor 3, control the longitudinally mounted first electric motor 3 to independently drive the vehicle; when a torque demand corresponding to the vehicle drive demand information falls within the torque range corresponding to the target second efficiency map corresponding to the longitudinally mounted second electric motor 5, to control the longitudinally mounted second electric motor 5 to independently drive the vehicle.

Therefore, the longitudinally mounted first electric motor 3 and the longitudinally mounted second electric motor 5 can participate in driving as needed. When the torque demand corresponding to the vehicle drive demand information falls within the torque range corresponding to the target first efficiency map corresponding to the longitudinally mounted first electric motor 3, the vehicle can be driven independently by the longitudinally mounted first electric motor 3 at this time, which can ensure that the longitudinally mounted first electric motor 3 operates within its high-efficiency range, and the longitudinally mounted first electric motor 3 can meet the drive demand of the vehicle at this time, thereby ensuring that the hybrid power system 100 operates within its high-efficiency range and also saving energy consumption.

In addition, when the torque demand corresponding to the vehicle drive demand information falls within the torque range corresponding to the target second efficiency map corresponding to the longitudinally mounted second electric motor 5, the vehicle can be driven independently by the longitudinally mounted second electric motor 5 at this time, which can ensure that the longitudinally mounted second electric motor 5 operates within its high-efficiency range, and the longitudinally mounted second electric motor 5 can meet the drive demand of the vehicle at this time, thereby ensuring that the hybrid power system 100 operates within its high-efficiency range and also saving energy consumption.

In some specific embodiments of the present application, when a torque demand corresponding to the vehicle drive demand information exceeds the torque range corresponding to the target first efficiency map and also exceeds the torque range corresponding to the target second efficiency map, but does not exceed the torque range corresponding to the sum of the target first efficiency map and the target second efficiency map, the longitudinally mounted first electric motor 3 and the longitudinally mounted second electric motor 5 are controlled to jointly drive the vehicle.

That is to say, under this working condition, neither the longitudinally mounted first electric motor 3 nor the longitudinally mounted second electric motor 5 can meet the drive demand of the vehicle, but the joint operation of the longitudinally mounted first electric motor 3 and the longitudinally mounted second electric motor 5 can meet the drive demand of the vehicle. At this time, the vehicle can be driven jointly by the longitudinally mounted first electric motor 3 and the longitudinally mounted second electric motor 5, which can ensure sufficient power for the vehicle, so that it is conducive to improving the acceleration performance of the vehicle, improving the power performance and improving user's driving experience.

In some specific embodiments of the present application, when the longitudinally mounted first electric motor 3 and the longitudinally mounted second electric motor 5 jointly drive the vehicle, the longitudinally mounted first electric motor 3 and the longitudinally mounted second electric motor 5 are configured such that the one with larger power between the longitudinally mounted first electric motor 3 and the longitudinally mounted second electric motor 5 outputs a maximum torque.

In this way, the one with larger power between the longitudinally mounted first electric motor 3 and the longitudinally mounted second electric motor 5 can play an active driving role when driving the vehicle, and the one with smaller power can play an auxiliary driving role, so as to ensure stronger power during dual-motor driving and avoid frequent adjustment of the output power of the two motors. Specifically, after the one with larger power between the longitudinally mounted first electric motor 3 and the longitudinally mounted second electric motor 5 outputs the maximum torque, the output torque of the one with larger power is a fixed value (i.e., the maximum output torque of the motor). At this time, the output torque of the motor with smaller power can be adjusted according to the torque demand corresponding to the vehicle drive demand, without adjusting the output torques of the two motors, which is conducive to simplifying the control logic of the hybrid power system 100.

According to some embodiments of the present application, as shown in FIGs. 2 to 4, the hybrid power system 100 further comprises a transmission 4 and a second coupling apparatus 10.

The transmission 4 is respectively connected to the longitudinally mounted first electric motor 3, the longitudinally mounted second electric motor 5 and the first coupling apparatus 2, a first end of the second coupling apparatus 10 is connected to the longitudinally mounted first electric motor 3, and a second end of the second coupling apparatus 10 is connected to the transmission 4, that is, the second coupling apparatus 10 is connected between the longitudinally mounted first electric motor 3 and the transmission 4.

The second coupling apparatus 10 is configured to: when in a decoupled state, disconnect the connection between the longitudinally mounted first electric motor 3 and the transmission 4. In this way, when the second coupling apparatus 10 is in a decoupled state, the power of the longitudinally mounted first electric motor 3 cannot be transmitted to the transmission 4, and at this time, the vehicle is driven independently by the longitudinally mounted second electric motor 5, which can reduce the drag loss of parking power generation while ensuring the power performance of the vehicle. When the second coupling apparatus 10 is in a coupled state, the longitudinally mounted first electric motor 3 is connected to the transmission 4, and the power of the longitudinally mounted first electric motor 3 and the power of the longitudinally mounted second electric motor 5 can be transmitted to the transmission 4, ensuring that the vehicle can be driven by dual motors in pure electric mode and improving the power performance of the vehicle.

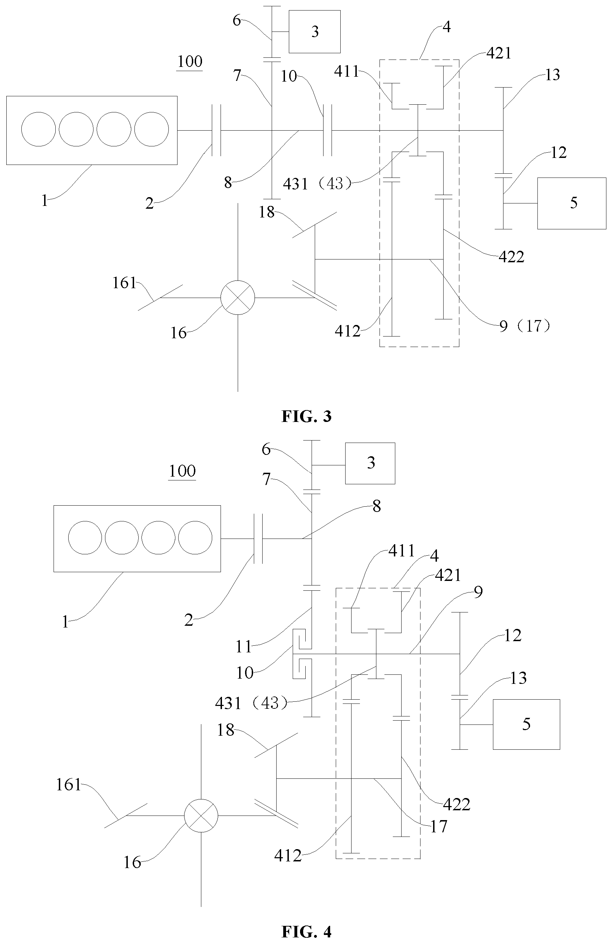

Furthermore, referring to FIGs. 2 and 3, the first coupling apparatus 2 and the second coupling apparatus 10 are arranged on the same shaft. For example, both the first coupling apparatus 2 and the second coupling apparatus 10 are arranged on a power input shaft 8, one end of the power input shaft 8 is connected to the engine 1, and the first coupling apparatus 2 and the second coupling apparatus 10 are spaced apart along an axial direction of the power input shaft 8.

Alternatively, the first coupling apparatus 2 and the second coupling apparatus 10 are arranged on different shafts. For example, the first coupling apparatus 2 is arranged on the power input shaft 8, and the second coupling apparatus 10 is arranged on a power output shaft 9 (as shown in FIG. 4), the power output shaft 9 is connected to the wheels for transmitting power to the wheels to drive the vehicle; or, the first coupling apparatus 2 is arranged on the power output shaft 9, and the second coupling apparatus 10 is arranged on the power input shaft 8 (not shown in the figure).

Therefore, when the second coupling apparatus 10 is in a decoupled state, the power of the engine 1 and the power of the longitudinally mounted first electric motor 3 cannot be transmitted to the transmission 4, and at this time, the vehicle is driven independently by the longitudinally mounted second electric motor 5. When the first coupling apparatus 2 is in a decoupled state and the second coupling apparatus 10 is in a coupled state, the power of the engine 1 cannot be transmitted to the transmission 4, and at this time, the vehicle is driven by the longitudinally mounted second electric motor 5 and the longitudinally mounted first electric motor 3, so that the vehicle can be driven by dual motors in pure electric mode. When both the first coupling apparatus 2 and the second coupling apparatus 10 are in a coupled state, the power of the engine 1, the power of the longitudinally mounted first electric motor 3 and the power of the longitudinally mounted second electric motor 5 can all be transmitted to the transmission 4, thereby improving the power performance of the vehicle.

According to some specific embodiments of the present application, the hybrid power system 100 further comprises a power input shaft 8 and a first transmission gear 7, the first transmission gear 7 is arranged on the power input shaft 8, and the first transmission gear 7 is respectively connected to the longitudinally mounted first electric motor 3 and the second coupling apparatus 10. Referring to FIGs. 1 to 7, an output shaft of the longitudinally mounted first electric motor 3 is provided with a first driving gear 6, the first transmission gear 7 meshes with the first driving gear 6, the first coupling apparatus 2 is located between the engine 1 and the first transmission gear 7, and the second coupling apparatus 10 is located on a side of the first transmission gear 7 away from the first coupling apparatus 2.

Therefore, by arranging the first coupling apparatus 2 between the first transmission gear 7 and the engine 1, when the first coupling apparatus 2 is in a decoupled state, the connection between the engine 1 and the power input shaft 8 can be disconnected, and at the same time, the rotational speed and torque of the longitudinally mounted first electric motor 3 can be transmitted to the power input shaft 8 through the mutually meshed first driving gear 6 and first transmission gear 7; when both the first coupling apparatus 2 and the second coupling apparatus 10 are in a coupled state, the cooperation of the engine 1, the longitudinally mounted first electric motor 3 and the longitudinally mounted second electric motor 5 is beneficial to realizing dual-motor driving of the vehicle, thereby improving the power performance of the vehicle in pure electric mode.

According to some embodiments of the present application, as shown in FIGs. 1 to 7, the hybrid power system 100 further comprises a first gear pair 41, a second gear pair 42 and a shifting device 43. The shifting device 43 is configured to control the power from the power source to switch from a first gear state flowing through the first gear pair 41 to a second gear state flowing through the second gear pair 42. The power source may be the engine 1; or, the power source may be the longitudinally mounted second electric motor 5; or, the power source may be the longitudinally mounted first electric motor 3 and the longitudinally mounted second electric motor 5. Therefore, when the hybrid power system 10 is working, the power can be transmitted to the transmission 4 through the first gear pair 41 or the second gear pair 42, and then transmitted to the vehicle through the transmission 4. Since the transmission ratio of the first gear pair 41 is different from the transmission ratio of the second gear pair 42, that is, the power transmitted to the vehicle is different, the vehicle can operate in different gears, effectively ensuring the power performance of the vehicle.

According to some embodiments of the present application, the shifting device 43 comprises a synchronizer 431. The synchronizer 431 can enable the gears to be engaged to mesh smoothly after their rotational speeds reach consistency, so as to switch the power between the first gear state flowing through the first gear pair 41 and the second gear state flowing through the second gear pair 42, thereby realizing the gear shifting of the hybrid power system 100 and ensuring that the vehicle can travel at different speeds.

Furthermore, the synchronizer 431 is arranged on the power input shaft 8 or the power output shaft 9. The synchronizer 431 may be arranged on the power input shaft 8 (as shown in FIG. 3); or, the synchronizer 431 may be arranged on the power output shaft 9 (as shown in FIGs. 1 and 2).

According to a first embodiment of the present application, as shown in FIG. 1, the first gear pair 41 comprises a first gear driving gear 411 and a first gear driven gear 412 that mesh with each other, the second gear pair 42 comprises a second gear driving gear 421 and a second gear driven gear 422 that mesh with each other, the first gear driving gear 411 and the second gear driving gear 421 are arranged on the power input shaft 8, the first gear driven gear 412 and the second gear driven gear 422 are arranged on the power output shaft 9. Both the first gear driving gear 411 and the second gear driving gear 421 are located on a side of the first transmission gear 7 away from the first coupling apparatus 2.

For example, in the embodiment of FIG. 1, in an axial direction of the power input shaft 8 and along a direction away from the engine 1, the first coupling apparatus 2, the first transmission gear 7, the first gear driving gear 411 and the second gear driving gear 421 are spaced apart in sequence. The synchronizer 431 is located between the first gear driven gear 412 and the second gear driven gear 422. At this time, the first gear driving gear 411 and the second gear driving gear 421 are in interference fit with the power input shaft 8, the second gear driving gear 421 is located at an end of the power input shaft 8, and the first gear driven gear 412 and the second gear driven gear 422 are loosely sleeved on the power input shaft 8.

Therefore, when the synchronizer 431 is engaged with the first gear driven gear 412, power can be transmitted to the first gear driving gear 411 through the power input shaft 8, the first gear driving gear 411 drives the first gear driven gear 412 to rotate, and power is transmitted to the power output shaft 9 through the synchronizer 431, and finally transmitted to the wheels; when the synchronizer 431 is engaged with the second gear driven gear 422, power can be transmitted to the second gear driving gear 421 through the power input shaft 8, the second gear driving gear 421 drives the second gear driven gear 422 to rotate, and power is transmitted to the power output shaft 9 through the synchronizer 431, and finally transmitted to the wheels.

According to a second embodiment of the present application, as shown in FIG. 2, the second coupling apparatus 10 is arranged on the power input shaft 8, and the second coupling apparatus 10 is located between the first transmission gear 7 and the first gear driving gear 411. That is to say, the first transmission gear 7 is located between the first coupling apparatus 2 and the second coupling apparatus 10. Therefore, the space between the first transmission gear 7 and the first gear driving gear 411 is effectively utilized, the structural arrangement of the hybrid power system 100 is compact, which is conducive to the miniaturization design of the hybrid power system 100. In addition, when the second coupling apparatus 10 is in a decoupled state, the power of the engine 1 and the power of the longitudinally mounted first electric motor 3 cannot be transmitted to the transmission 4, and at this time, the vehicle is driven independently by the longitudinally mounted second electric motor 5.

According to a third embodiment of the present application, the synchronizer 431 is located between the first gear driving gear 411 and the second gear driving gear 421. As shown in FIG. 3, in an axial direction of the power input shaft 8, the first coupling apparatus 2, the first transmission gear 7, the second coupling apparatus 10, the first gear driving gear 411, the synchronizer 431 and the second gear driving gear 421 are arranged on the power input shaft 8 at intervals in sequence, and both the first gear driven gear 412 and the second gear driven gear 422 are arranged on the power output shaft 9. As a result, the length of the power output shaft 9 can be reduced.

When the synchronizer 431 is engaged with the first gear driving gear 411, the power of the power input shaft 8 is transmitted to the power output shaft 9 through the first gear driving gear 411 and the first gear driven gear 412, and then transmitted to the wheels; when the synchronizer 431 is engaged with the second gear driving gear 421, the power of the power input shaft 8 is transmitted to the power output shaft 9 through the second gear driving gear 421 and the second gear driven gear 422, and then transmitted to the wheels.

According to a fourth embodiment of the present application, as shown in FIG. 4, the second coupling apparatus 10, the first gear driving gear 411 and the second gear driving gear 421 are arranged on the power output shaft 9, the first gear driven gear 412 and the second gear driven gear 422 are arranged on a differential power input shaft 17, the differential power input shaft 17 is connected to a differential 16, and the first coupling apparatus 2 and the first transmission gear 7 are arranged on the power input shaft 8. Therefore, the components of the hybrid power system 100 can be distributed on three shafts, which can reduce the size of the hybrid power system 100 on the power input shaft 8 and facilitate the miniaturization design of the hybrid power system 100.

Furthermore, as shown in FIG. 4, the hybrid power system 100 further comprises a second driven gear 11, the second driven gear 11 is arranged on the power output shaft 9, the second driven gear 11 meshes with the first transmission gear 7, and the second coupling apparatus 10 is arranged on a side of the second driven gear 11 away from the first gear driving gear 411. That is to say, in an axial direction of the power output shaft 9, the second coupling apparatus 10, the second driven gear 11, the first gear driving gear 411 and the second gear driving gear 421 are spaced apart in sequence. Therefore, the influence of the second coupling apparatus 10 on the first gear pair 41 or the second gear pair 42 can be reduced, thereby ensuring the smoothness of power transmission of the hybrid system 100.

Referring to FIG. 4, the second driven gear 11 is loosely sleeved on the power output shaft 9, and the second coupling apparatus 10 is arranged at an end of the power output shaft 9 and in interference fit with the power output shaft 9. When the second coupling apparatus 10 is in a coupled state, the second driven gear 11 is engaged with the second coupling apparatus 10, the power of the longitudinally mounted first electric motor 3 can be transmitted to the power input shaft 8 through the first driving gear 6 and the first transmission gear 7, the first transmission gear 7 drives the second driven gear 11 to rotate, and then the power is transmitted to the power output shaft 9 through the second coupling apparatus 10, and the power of the power output shaft 9 is transmitted to the differential power input shaft 17 through the first gear pair 41 or the second gear pair 42, and finally transmitted to the wheels through the differential 16.

Optionally, the second coupling apparatus 10 may be a wet clutch, an electromagnetic clutch or a one-way clutch, but is not limited thereto.

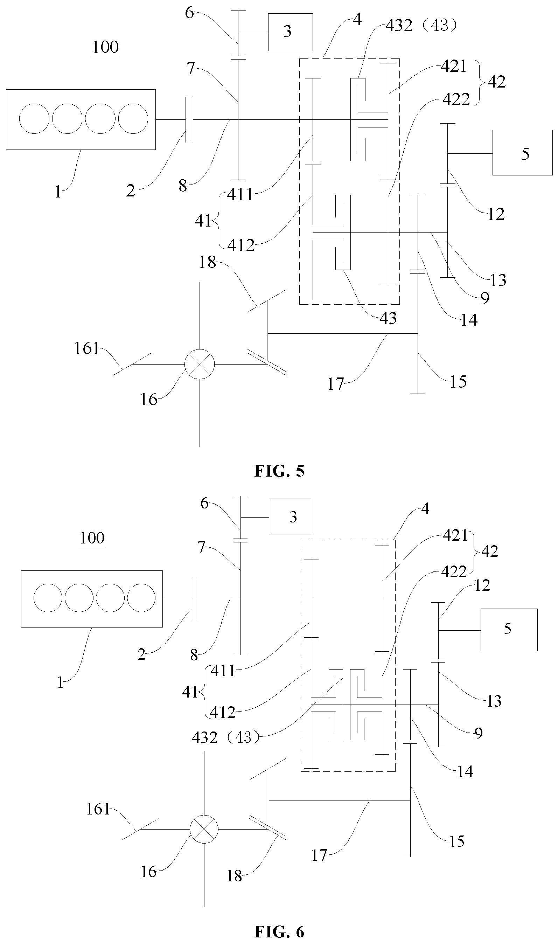

According to other embodiments of the present application, as shown in FIGs. 5 to 7, the shifting device 43 comprises two one-way clutches 432. The one-way clutch 432 has a simple structure and lower cost compared with the synchronizer 431, thereby improving the market competitiveness of the hybrid power system 100.

According to a fifth embodiment of the present application, the two one-way clutches 432 are arranged on different shafts. For example, in the embodiment of FIG. 5, the two one-way clutches 432 are respectively arranged on the power input shaft 8 and the power output shaft 9. With such an arrangement, the size of the hybrid power system 100 can be effectively reduced, thereby increasing the structural compactness of the hybrid power system 100 and further improving the reliability of the hybrid power system 100.

Furthermore, the two one-way clutches 432 are arranged in a staggered configuration. For example, in the embodiment of FIG. 5, both the two one-way clutches 432 are located between the first gear pair 41 and the second gear pair 42, one of the two one-way clutches 432 is connected to the first gear pair 41, and the other of the two one-way clutches 432 is connected to the second gear pair 42. That is to say, the above-mentioned one of the two one-way clutches 432, the first gear driving gear 411 and the second gear driving gear 421 are arranged on the power input shaft 8, that is, a one-way clutch 432 is arranged between the first gear driving gear 411 and the second gear driving gear 421. The above-mentioned other of the two one-way clutches 432, the first gear driven gear 412 and the second gear driven gear 422 are arranged on the power output shaft 9, that is, a one-way clutch 432 is arranged between the first gear driven gear 412 and the second gear driven gear 422, and the two one-way clutches 432 are arranged in a staggered configuration in an axial direction of the power input shaft 8.

The power from the power source can be transmitted through different paths selected by the two one-way clutches 432. That is to say, during use, the hybrid power system 100 can transmit power through different paths according to the speed requirements. When the one-way clutch 432 connected to the second gear pair 42 is not engaged with the second gear pair 42, and the one-way clutch 432 connected to the first gear pair 41 is engaged with the first gear pair 41, the power from the power source can be transmitted to the wheels through the first gear pair 41 to control the rotation of the wheels; or, when the one-way clutch 432 connected to the first gear pair 41 is not engaged with the first gear pair 41, and the one-way clutch 432 connected to the second gear pair 42 is engaged with the second gear pair 42, the power from the power source can be transmitted to the wheels through the second gear pair 42 to control the rotation of the wheels. At the same time, the two one-way clutches 432 are both arranged between the first gear pair 41 and the second gear pair 42, which is conducive to the engagement of the two one-way clutches 432 with the corresponding gear pairs, thereby facilitating the power transmission of the hybrid system 100.

Moreover, the above-mentioned one of the two one-way clutches 432 is connected to the second gear driving gear 421, and the above-mentioned other of the two one-way clutches 432 is connected to the first gear driven gear 412. As shown in FIG. 5, the one-way clutch 432 located on the power input shaft 8 is connected to the second gear driving gear 421, when the one-way clutch 432 is engaged with the second gear driving gear 421, the power of the power input shaft 8 is transmitted to the power output shaft 9 through the second gear driving gear 421 and the second gear driven gear 422. The one-way clutch 432 located on the power output shaft 9 is connected to the first gear driven gear 412, when the one-way clutch 432 is engaged with the first gear driven gear 412, the power of the power input shaft 8 is transmitted to the power output shaft 9 through the first gear driving gear 411 and the first gear driven gear 412.

According to a sixth embodiment of the present application, as shown in FIG. 6, the two one-way clutches 432 are arranged back-to-back on the power input shaft 8 or the power output shaft 9. So that it is conducive to increasing the smoothness of the hybrid system 100 during the gear shifting process.

In addition, the two one-way clutches 432 can also be arranged facing each other.

Furthermore, referring to FIG. 6, the first gear driving gear 411 and the second gear driving gear 421 are arranged on the power input shaft 8, the two one-way clutches 432, the first gear driven gear 412 and the second gear driven gear 422 are arranged on the power output shaft 9, and the two one-way clutches 432 are respectively connected to the first gear driven gear 412 and the second gear driven gear 422. During the use of the hybrid power system 100, the two one-way clutches 432 respectively control whether to connect the first gear composed of the corresponding first gear driving gear 411 and first gear driven gear 412, or the second gear composed of the second gear driving gear 421 and second gear driven gear 422, thereby controlling the shifting of gears, namely, enabling the power from the power source to be transmitted to the first gear driven gear 412 through the first gear driving gear 411, or enabling the power from the power source to be transmitted to the second gear driven gear 422 through the second gear driving gear 421. As a result, the structural complexity of the hybrid power system 100 is effectively reduced, thereby improving the compactness of the hybrid power system 100 and reducing the occupied space of the hybrid power system 100.

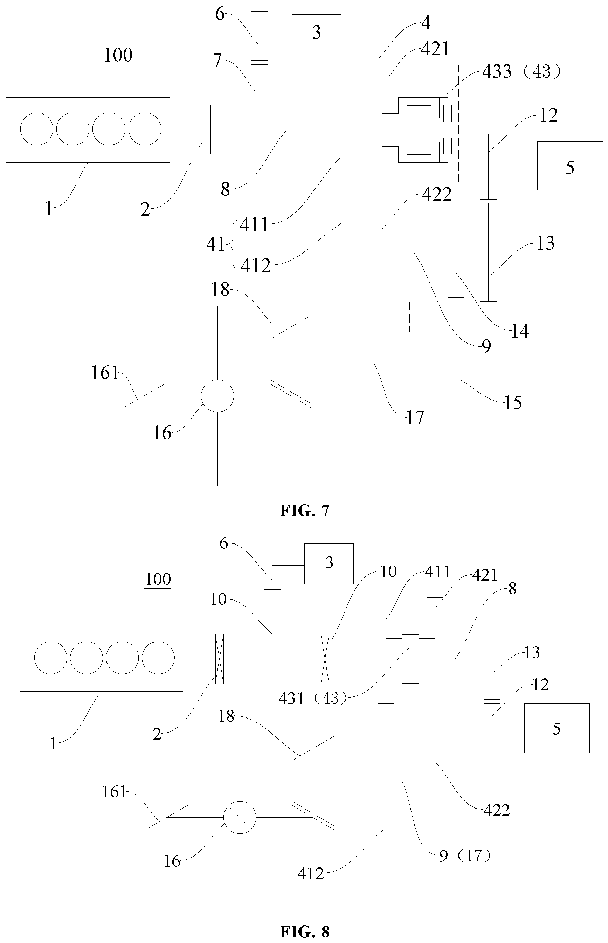

According to a seventh embodiment of the present application, as shown in FIG. 7, the shifting device 43 comprises a dual clutch 433, which is arranged on the power input shaft 8 or the power output shaft 9. The dual clutch 433 is located at an end of the power output shaft 9 or the power input shaft 8.

Specifically, the dual clutch 433, the first gear driving gear 411 and the second gear driving gear 421 are arranged on the power input shaft 8, and the first gear driven gear 412 and the second gear driven gear 422 are arranged on the power output shaft 9. The dual clutch 433 may be located at an end of the power output shaft 9, and the dual clutch 433 is similar to two back-to-back one-way clutches 432. With such an arrangement, the number of components of the hybrid power system 100 can be reduced, thereby improving the compactness of the hybrid power system 100 and reducing the occupied space of the hybrid power system 100.

According to some embodiments of the present application, the hybrid power system 100 further comprises a second transmission gear 13, the second transmission gear 13 is arranged on the power input shaft 8 or the power output shaft 9, and the second transmission gear 13 is respectively connected to the longitudinally mounted second electric motor 5 and the transmission 4.

Referring to FIGs. 1 to 2 and 4 to 7, the output shaft of the longitudinally mounted second electric motor 5 is provided with a second driving gear 12, the second transmission gear 13 is arranged on the power output shaft 9, the power of the longitudinally mounted second electric motor 5 is transmitted to the power output shaft 9 through the second driving gear 12 and the second transmission gear 13, and then transmitted to the differential power input shaft 17 through the first gear pair 41 or the second gear pair 42, and finally transmitted to the wheels through the differential 16, so as to realize the operation of the vehicle in pure electric mode.

Referring to FIG. 3, the second transmission gear 13 is arranged on the power input shaft 8, the power of the longitudinally mounted second electric motor 5 is transmitted to the power input shaft 8 through the second driving gear 12 and the second transmission gear 13, and then transmitted to the power output shaft 9 through the first gear pair 41 or the second gear pair 42, and finally transmitted to the wheels through the differential 16, so as to realize the operation of the vehicle in pure electric mode.

According to some embodiments of the present application, the hybrid power system 100 further comprises a differential 16 and a differential power input shaft 17, the differential 16 has a first bevel gear 161, the differential power input shaft 17 is provided with a second bevel gear 18, the second bevel gear 18 meshes with the first bevel gear 161, and a central axis of the first bevel gear 161 is perpendicular to a central axis of the second bevel gear 18. With such an arrangement, it is beneficial to change the transmission direction of power, that is, to change the power transmitted along an axial direction of the power output shaft 9 to the power transmitted along a radial direction of the power output shaft 9.

According to some embodiments of the present application, the hybrid power system 100 further comprises a secondary driving gear 14 and a secondary driven gear 15 that mesh with each other, both the secondary driving gear 14 and the secondary driven gear 15 are arranged on the power output shaft 9, and the secondary driven gear 15 is located between the second transmission gear 13 and the second bevel gear 18. With such an arrangement, the meshing area between the power output shaft 9 and the differential 16 is increased by the cooperation between the first bevel gear 161 and the second bevel gear 18, thereby increasing the stability of power transmission from the power output shaft 9 to the differential 16. The secondary driven gear 15 is arranged coaxially with the differential 16, so that the power transmitted from the power output shaft 9 can be transmitted to the differential 16, effectively increasing the efficiency of power transmission.

In some specific embodiments of the present application, the hybrid power system 100 further comprises a transmission 4, the transmission 4 is respectively connected to the longitudinally mounted first electric motor 3, the longitudinally mounted second electric motor 5 and the first coupling apparatus 2. The hybrid power system 100 is configured to: when in a second state, disconnect the connection between the engine 1 and the longitudinally mounted first electric motor 3 and the connection between the engine 1 and the transmission 4 by means of the first coupling apparatus 2, and to control the power of the longitudinally mounted first electric motor 3 and the power of the longitudinally mounted second electric motor 5 to be coupled at the transmission 4 to drive the vehicle.

That is to say, in the second state, the hybrid power system 100 is driven by multiple motors. At this time, the engine 1 does not transmit power to the longitudinally mounted first electric motor 3, that is, the engine 1 does not drive the longitudinally mounted first electric motor 3 to generate electricity, and the engine 1 does not transmit power to the transmission 4, that is, the engine 1 does not participate in driving the vehicle. In this way, the engine 1 will not have power interference with the longitudinally mounted first electric motor 3, the longitudinally mounted first electric motor 3 can transmit power to the transmission 4, and the longitudinally mounted second electric motor 5 can also transmit power to the transmission 4, thereby realizing multi-motor driving of the hybrid power system 100, so that the power drive of the hybrid system 100 in pure electric mode is stronger and the acceleration performance is better.

In some specific embodiments of the present application, the transmission 4 has a plurality of gears, and the hybrid power system 100 is configured to: when in a second state, adjust a transmission ratio of the power of at least the longitudinally mounted first electric motor 3 among the longitudinally mounted first electric motor 3 and the longitudinally mounted second electric motor 5 through different gears of the transmission 4.

That is to say, the transmission 4 can only adjust the transmission ratio of the power of the longitudinally mounted first electric motor 3; or, the transmission 4 can adjust the transmission ratio of the power of the longitudinally mounted first electric motor 3 and the transmission ratio of the power of the longitudinally mounted second electric motor 5 at the same time. As a result, the output torque and vehicle speed of the hybrid power system 100 in the second state (i.e., during multi-motor driving) can be more matched with the required torque of the vehicle, which is conducive to improving the power performance of the vehicle, and making the vehicle have lower energy consumption and better economy.

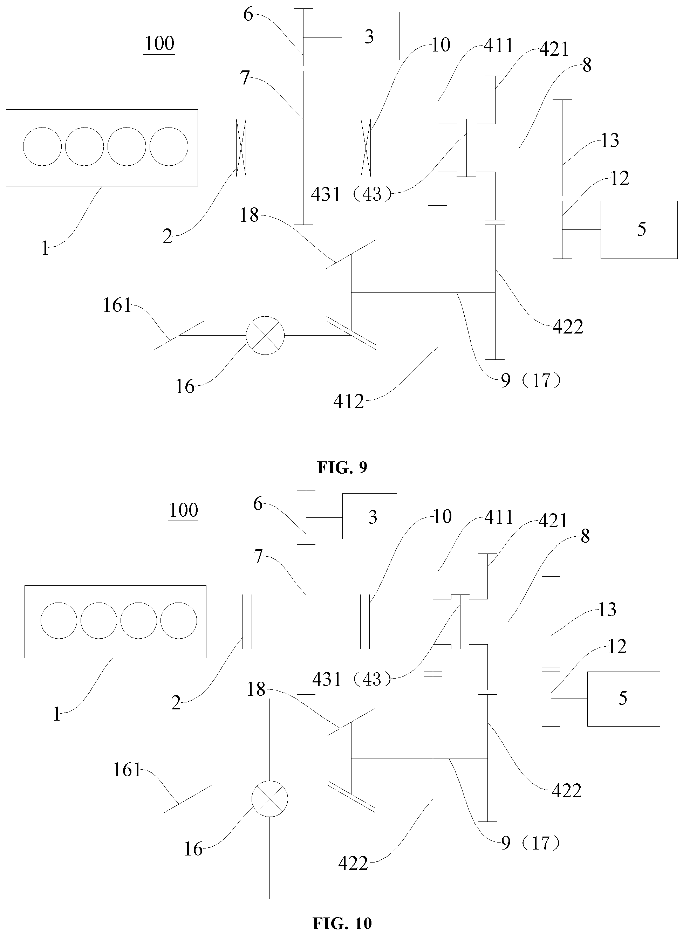

Specifically, as shown in FIGs. 8 and 9, the hybrid power system 100 has a dual-motor drive first gear mode and a dual-motor drive second gear mode in the second state.

As shown in FIG. 8, when the hybrid power system 100 is in the dual-motor drive first gear mode, the first coupling apparatus 2 is decoupled, the second coupling apparatus 10 is coupled, the shifting device 43 is meshed with the first gear pair 41, and the power of the longitudinally mounted first electric motor 3 and the power of the longitudinally mounted second electric motor 5 can be transmitted to the power output shaft 9 through the first gear pair 41, thereby driving the vehicle to move (or, the power of the longitudinally mounted first electric motor 3 is transmitted to the power output shaft 9 through the first gear pair 41, and the power of the longitudinally mounted second electric motor 5 is directly transmitted to the power output shaft 9 through the second driving gear 12, the second transmission gear 13, the secondary driving gear 14 and the secondary driven gear 15, thereby driving the vehicle to move).

As shown in FIG. 9, when the hybrid power system 100 is in the dual-motor drive second gear mode, the first coupling apparatus 2 is decoupled, the second coupling apparatus 10 is coupled, the shifting device 43 is meshed with the second gear pair 42, and the power of the longitudinally mounted first electric motor 3 and the power of the longitudinally mounted second electric motor 5 can be transmitted to the power output shaft 9 through the second gear pair 42, thereby driving the vehicle to move (or, the power of the longitudinally mounted first electric motor 3 is transmitted to the power output shaft 9 through the second gear pair 42, and the power of the longitudinally mounted second electric motor 5 is directly transmitted to the power output shaft 9 through the second driving gear 12, the second transmission gear 13, the secondary driving gear 14 and the secondary driven gear 15, thereby driving the vehicle to move).

In some specific embodiments of the present application, the transmission 4 has a plurality of gears, and the hybrid power system 100 is configured to: when in a third state, disconnect the connection between the engine 1 and the longitudinally mounted first electric motor 3 and the connection between the engine 1 and the transmission 4 by means of the first coupling apparatus 2, to control the power of the longitudinally mounted second electric motor 5 to drive the vehicle through the transmission 4, and to adjust the transmission ratio of the power of the longitudinally mounted second electric motor 5 through different gears of the transmission 4.

That is to say, when the hybrid power system 100 is in the third state, the hybrid power system 100 is driven by a single motor, the longitudinally mounted first electric motor 3 does not participate in driving, and the longitudinally mounted second electric motor 5 drives the vehicle independently. At this time, the transmission ratio of the power of the longitudinally mounted second electric motor 5 is adjusted through the transmission 4, so that the output torque and vehicle speed of the hybrid power system 100 in the third state can be more matched with the required torque of the vehicle, which is conducive to improving the power performance of the vehicle, and making the energy consumption of the vehicle lower and the economy better.

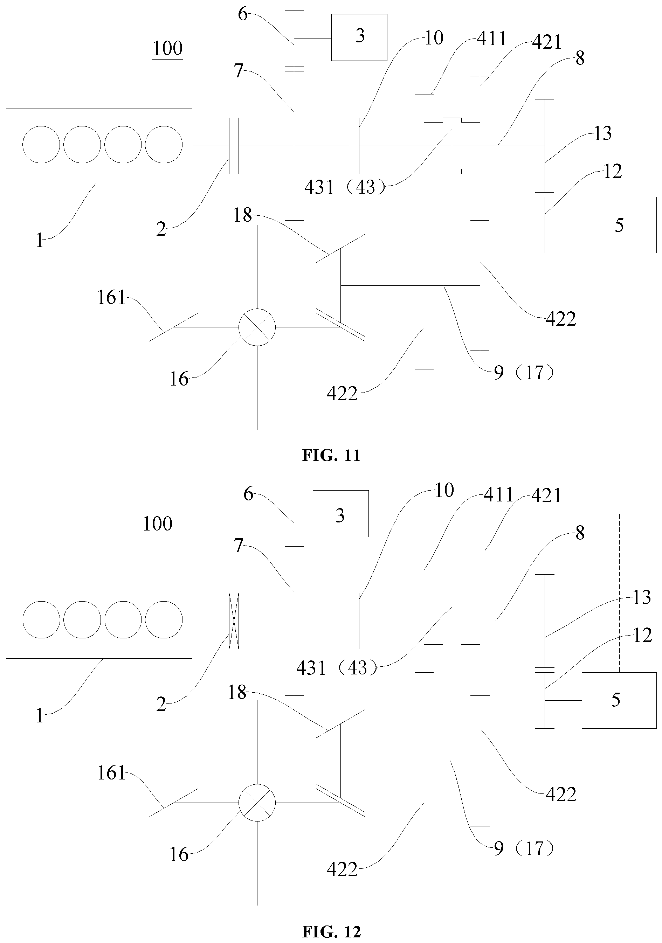

Specifically, as shown in FIGs. 10 and 11, the hybrid power system 100 has a single-motor drive first gear mode and a single-motor drive second gear mode in the third state, that is, an EV mode first gear and an EV mode second gear.

As shown in FIG. 10, when the hybrid power system 100 is in the single-motor drive first gear mode, the first coupling apparatus 2 is decoupled, the second coupling apparatus 10 is decoupled, the shifting device 43 is meshed with the first gear pair 41, and the power of the longitudinally mounted second electric motor 5 is transmitted to the power output shaft 9 through the first gear pair 41, thereby driving the vehicle to move.

As shown in FIG. 11, when the hybrid power system 100 is in the single-motor drive second gear mode, the first coupling apparatus 2 is decoupled, the second coupling apparatus 10 is decoupled, the shifting device 43 is meshed with the second gear pair 42, and the power of the longitudinally mounted second electric motor 5 is transmitted to the power output shaft 9 through the second gear pair 42, thereby driving the vehicle to move.

In some specific embodiments of the present application, the transmission 4 has a plurality of gears, and the hybrid power system 100 is configured to: when in a fourth state, couple the connection between the engine 1 and the longitudinally mounted first electric motor 3 by means of the first coupling apparatus 2, to disconnect the connection between the transmission 4 and the longitudinally mounted first electric motor 3, to control the power of the engine 1 to be transmitted to the longitudinally mounted first electric motor 3 through the first coupling apparatus 2. The longitudinally mounted first electric motor 3 generates electricity and transmits the generated electric energy to the longitudinally mounted second electric motor 5, the power of the longitudinally mounted second electric motor 5 participates in driving through the transmission 4, and the transmission ratio of the power of the longitudinally mounted second electric motor 5 is adjusted through different gears of the transmission 4.

Specifically, the power output by the engine 1 can be transmitted to the longitudinally mounted first electric motor 3 to drive the longitudinally mounted first electric motor 3 to operate and generate electricity, and the longitudinally mounted first electric motor 3 drives the longitudinally mounted second electric motor 5 to operate, and then the power of the longitudinally mounted second electric motor 5 can be transmitted to the differential 16 through the transmission 4 to drive the wheels to rotate, so that the vehicle can operate normally.

As a result, when the power of the power battery is too low, the engine 1 can drive the longitudinally mounted first electric motor 3 to supply power to the longitudinally mounted second electric motor 5, and the longitudinally mounted second electric motor 5 drives the vehicle to move, which will not cause damage to the power battery due to power shortage, and at the same time ensure sufficient driving force of the longitudinally mounted second electric motor 5.

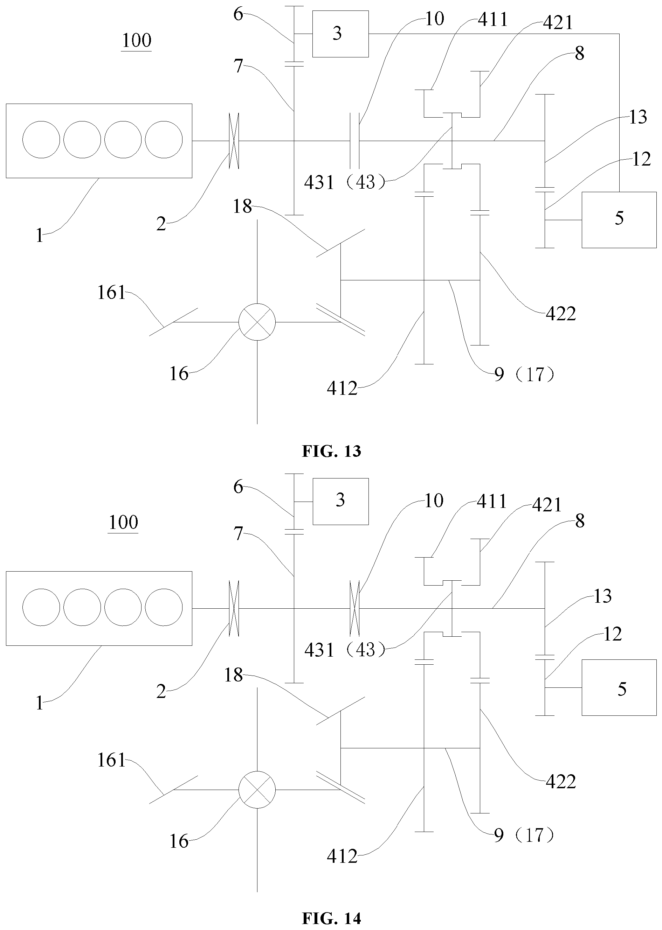

Specifically, as shown in FIGs. 12 and 13, the hybrid power system 100 has a series first gear mode and a series second gear mode in the fourth state.

As shown in FIG. 12, when the hybrid power system 100 is in the series first gear mode, the first coupling apparatus 2 is coupled, the second coupling apparatus 10 is decoupled, the shifting device 43 is meshed with the first gear pair 41, the engine 1 drives the longitudinally mounted first electric motor 3 to generate electricity, the longitudinally mounted first electric motor 3 supplies power to the longitudinally mounted second electric motor 5, and the power of the longitudinally mounted second electric motor 5 is transmitted to the power output shaft 9 through the first gear pair 41, thereby driving the vehicle to move.

As shown in FIG. 13, when the hybrid power system 100 is in the series second gear mode, the first coupling apparatus 2 is coupled, the second coupling apparatus 10 is decoupled, the shifting device 43 is meshed with the second gear pair 42, the engine 1 drives the longitudinally mounted first electric motor 3 to generate electricity, the longitudinally mounted first electric motor 3 supplies power to the longitudinally mounted second electric motor 5, and the power of the longitudinally mounted second electric motor 5 is transmitted to the power output shaft 9 through the second gear pair 42, thereby driving the vehicle to move.

In some specific embodiments of the present application, the transmission 4 has a plurality of gears, and the hybrid power system 100 is configured to: when in a fifth state, couple the connection between the engine 1 and the transmission 4 by means of the first coupling apparatus 2, to control the power of the engine 1 to be transmitted to the transmission 4 through the first coupling apparatus 2. The power of the engine 1 and the power of the longitudinally mounted second electric motor 5 are coupled at the transmission 4 to drive the vehicle, and the transmission ratio of the power of at least the engine 1 among the engine 1 and the longitudinally mounted second electric motor 5 is adjusted through different gears of the transmission 4.

As a result, the engine 1 and the longitudinally mounted second electric motor 5 can drive the vehicle simultaneously, which is conducive to increasing the output torque of the hybrid power system 100 to ensure sufficient power of the hybrid power system 100.

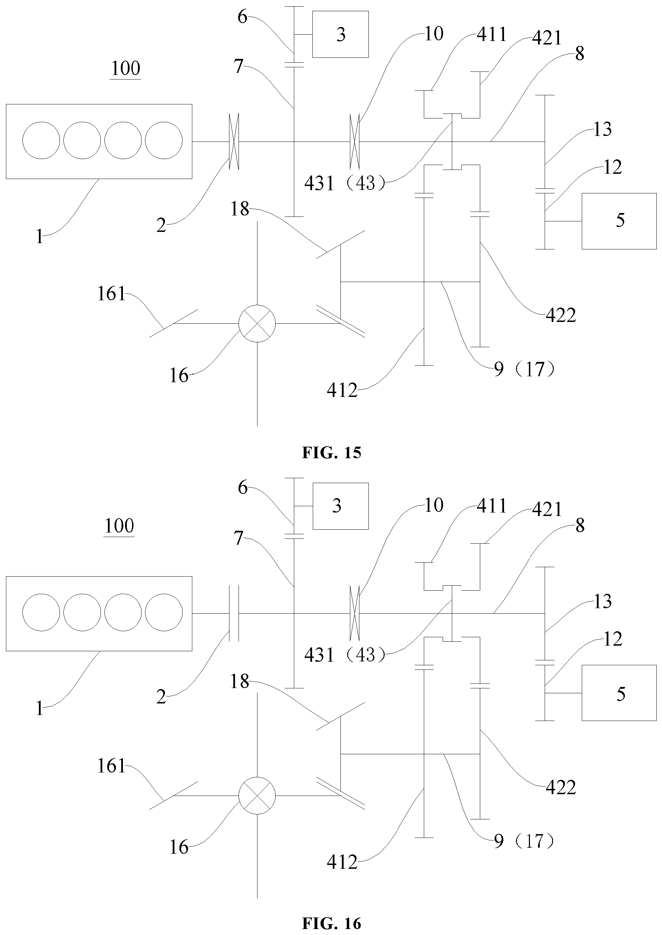

Specifically, as shown in FIGs. 14 and 15, the hybrid power system 100 has a parallel first gear mode and a parallel second gear mode in the fifth state.

As shown in FIG. 14, when the hybrid power system 100 is in the parallel first gear mode, the first coupling apparatus 2 is coupled, the second coupling apparatus 10 is coupled, the shifting device 43 is meshed with the first gear pair 41, and the power of the engine 1 and the power of the longitudinally mounted second electric motor 5 can be transmitted to the power output shaft 9 through the first gear pair 41, thereby driving the vehicle to move (or, the power of the engine 1 is transmitted to the power output shaft 9 through the first gear pair 41, and the power of the longitudinally mounted second electric motor 5 is directly transmitted to the power output shaft 9 through the second driving gear 12, the second transmission gear 13, the secondary driving gear 14 and the secondary driven gear 15, thereby driving the vehicle to move).

As shown in FIG. 15, when the hybrid power system 100 is in the parallel second gear mode, the first coupling apparatus 2 is coupled, the second coupling apparatus 10 is coupled, the shifting device 43 is meshed with the second gear pair 42, and the power of the engine 1 and the power of the longitudinally mounted second electric motor 5 can be transmitted to the power output shaft 9 through the second gear pair 42, thereby driving the vehicle to move (or, the power of the engine 1 is transmitted to the power output shaft 9 through the second gear pair 42, and the power of the longitudinally mounted second electric motor 5 is directly transmitted to the power output shaft 9 through the second driving gear 12, the second transmission gear 13, the secondary driving gear 14 and the secondary driven gear 15, thereby driving the vehicle to move).

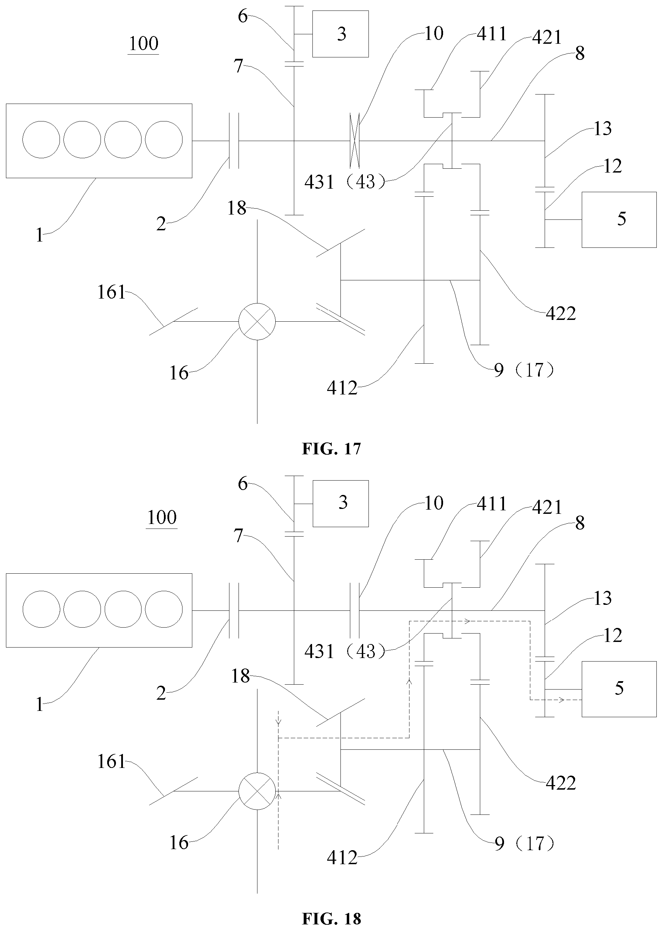

In addition, as shown in FIGs. 16 and 17, the hybrid power system 100 can also have an engine direct drive mode, that is, the vehicle is driven independently by the engine 1, and at this time, neither the longitudinally mounted first electric motor 3 nor the longitudinally mounted second electric motor 5 participates in driving the vehicle. Moreover, the hybrid power system 100 has an engine direct drive first gear mode and an engine direct drive second gear mode in the direct drive mode.

As shown in FIG. 16, when the hybrid power system 100 is in the engine direct drive first gear mode, the first coupling apparatus 2 is coupled, the second coupling apparatus 10 is coupled, the longitudinally mounted second electric motor 5 does not work, the shifting device 43 is meshed with the first gear pair 41, and the power of the engine 1 is transmitted to the power output shaft 9 through the first gear pair 41, thereby driving the vehicle to move.

As shown in FIG. 17, when the hybrid power system 100 is in the engine direct drive second gear mode, the first coupling apparatus 2 is coupled, the second coupling apparatus 10 is coupled, the longitudinally mounted second electric motor 5 does not work, the shifting device 43 is meshed with the second gear pair 42, and the power of the engine 1 is transmitted to the power output shaft 9 through the second gear pair 42, thereby driving the vehicle to move.

In some specific embodiments of the present application, as shown in FIG. 18, the hybrid power system 100 is configured to: when in a sixth state, disconnect the connection between the engine 1 and the longitudinally mounted first electric motor 3 and the connection between the engine 1 and the transmission 4 by means of the first coupling apparatus 2, to control a braking force to be transmitted to the longitudinally mounted first electric motor 3 and/or the longitudinally mounted second electric motor 5 through the transmission 4, and the longitudinally mounted first electric motor 3 and/or the longitudinally mounted second electric motor 5 recover energy by generating electricity.

Therefore, when the vehicle is braking, the braking force will drive the longitudinally mounted second electric motor 5 to generate electricity through the power output shaft 9, the first gear pair 41 or the second gear pair 42, the second transmission gear 13 and the second driving gear 12, and/or the braking force will drive the longitudinally mounted first electric motor 3 to generate electricity through the power output shaft 9, the first gear pair 41 or the second gear pair 42, the first transmission gear 7 and the first driving gear 6, thereby recovering braking energy and further improving the economy of the hybrid power system 100.

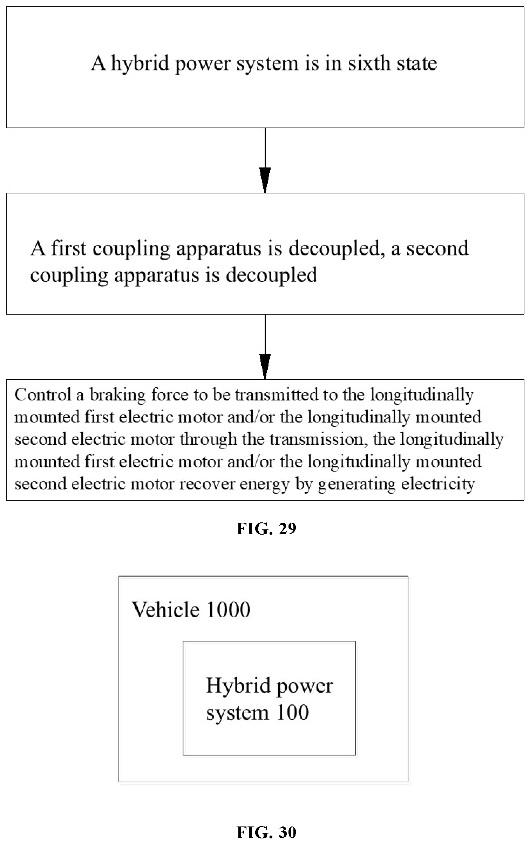

A vehicle 1000 according to the embodiment of the present application is described below with reference to the accompanying drawings. The vehicle 1000 comprises a hybrid power system 100 according to any one of the above embodiments of the present application, as shown in FIG. 30.

The vehicle 1000 according to the embodiment of the present application, by using the hybrid power system 100 according to the above embodiments of the present application, can realize dual-motor driving, so that the entire vehicle has better power performance and more excellent acceleration performance, and it is conducive to improving user's driving experience.

Other configurations and operations of the hybrid power system 100 and the vehicle 1000 having the same according to the embodiments of the present application are known to those skilled in the art, and will not be described in detail herein.

In the description of this specification, the description of the reference terms "an embodiment", "some embodiments", "an example", "a specific example", "some examples", and the like means that specific features, structures, materials or characteristics described in conjunction with the embodiment or example are included in at least one embodiment or example of the present application. In this specification, exemplary descriptions of the foregoing terms do not necessarily refer to the same embodiment or example.

Although the embodiments of the present application have been shown and described above, those skilled in the art will appreciate that various changes, modifications, substitutions and variations may be made to the embodiments without departing from the principles and spirit of the present application, and that the scope of the present application is defined by the claims and their equivalents.

## Claims

1. A hybrid power system (100), comprising:
an engine (1);
a longitudinally mounted first electric motor (3);
a longitudinally mounted second electric motor (5); and
a first coupling apparatus (2);
the hybrid power system (100) is configured to: when in a first state, disconnect the engine (1) from the longitudinally mounted first electric motor (3) by means of the first coupling apparatus (2), and to control the longitudinally mounted first electric motor (3) and the longitudinally mounted second electric motor (5) to jointly drive the vehicle.

2. The hybrid power system (100) according to claim 1, wherein, the longitudinally mounted first electric motor (3) and the longitudinally mounted second electric motor (5) are configured to:
determine the working states of the longitudinally mounted first electric motor (3) and the longitudinally mounted second electric motor (5) according to vehicle drive demand information, a target first efficiency map corresponding to the longitudinally mounted first electric motor (3), and a target second efficiency map corresponding to the longitudinally mounted second electric motor (5).

3. The hybrid power system (100) according to claim 2, wherein, the longitudinally mounted first electric motor (3) and the longitudinally mounted second electric motor (5) are configured to:
when a torque demand corresponding to the vehicle drive demand information falls within the torque range corresponding to the target first efficiency map of the longitudinally mounted first electric motor (3), control the longitudinally mounted first electric motor (3) to independently drive the vehicle;
when a torque demand corresponding to the vehicle drive demand information falls within the torque range corresponding to the target second efficiency map of the longitudinally mounted second electric motor (5), to control the longitudinally mounted second electric motor (5) to independently drive the vehicle.

4. The hybrid power system (100) according to claim 2 or 3, wherein, the longitudinally mounted first electric motor (3) and the longitudinally mounted second electric motor (5) are configured to: when a torque demand corresponding to the vehicle drive demand information exceeds the torque range corresponding to the target first efficiency map and also exceeds the torque range corresponding to the target second efficiency map, but does not exceed the torque range corresponding to the sum of the target first efficiency map and the target second efficiency map, control the longitudinally mounted first electric motor (3) and the longitudinally mounted second electric motor (5) to jointly drive the vehicle.

5. The hybrid power system (100) according to claim 4, wherein, the longitudinally mounted first electric motor (3) and the longitudinally mounted second electric motor (5) are configured such that: when the longitudinally mounted first electric motor (3) and the longitudinally mounted second electric motor (5) jointly drive the vehicle,
the one with larger power between the longitudinally mounted first electric motor (3) and the longitudinally mounted second electric motor (5) outputs a maximum torque.

6. The hybrid power system (100) according to any one of claims 1 to 5, further comprising:
a transmission (4), the transmission (4) is respectively connected to the longitudinally mounted first electric motor (3), the longitudinally mounted second electric motor (5) and the first coupling apparatus (2); and
a second coupling apparatus (10), a first end of the second coupling apparatus (10) is connected to the longitudinally mounted first electric motor (3), and a second end of the second coupling apparatus (10) is connected to the transmission (4);
wherein, the second coupling apparatus (10) is configured to: when in a decoupled state, disconnect the connection between the longitudinally mounted first electric motor (3) and the transmission (4).

7. The hybrid power system (100) according to claim 6, the first coupling apparatus (2) and the second coupling apparatus (10) are arranged on the same shaft; or,
the first coupling apparatus (2) and the second coupling apparatus (10) are arranged on different shafts.

8. The hybrid power system (100) according to claim 6 or 7, further comprising:
a power input shaft (8); and
a first transmission gear (7), the first transmission gear (7) is arranged on the power input shaft (8), and the first transmission gear (7) is respectively connected to the longitudinally mounted first electric motor (3) and the second coupling apparatus (10).

9. The hybrid power system (100) according to any one of claims 1 to 8, comprising:
a first gear pair (41);
a second gear pair (42); and
a shifting device (43), the shifting device (43) is configured to: control the power from the power source to switch from a first gear state flowing through the first gear pair (41) to a second gear state flowing through the second gear pair (42).

10. The hybrid power system (100) according to claim 9, the shifting device (43) comprises a synchronizer (431), the synchronizer (431) is arranged on the power input shaft (8) or the power output shaft (9).

11. The hybrid power system (100) according to claim 9 or 10, the shifting device (43) comprises two one-way clutches (432), the two one-way clutches (432) are arranged on different shafts.

12. The hybrid power system (100) according to claim 11, the two one-way clutches (432) are arranged in a staggered configuration.

13. The hybrid power system (100) according to claim 9 or 10, the shifting device (43) comprises two one-way clutches (432), and the two one-way clutches (432) are arranged back-to-back on the power input shaft (8) or the power output shaft (9).

14. The hybrid power system (100) according to claim 9 or 10, the shifting device (43) comprises a dual clutch (433), the dual clutch (433) is arranged on the power input shaft (8) or the power output shaft (9).

15. The hybrid power system (100) according to claim 14, the dual clutch (433) is located at an end of the power output shaft (9) or the power input shaft (8).

16. The hybrid power system (100) according to any one of claims 6 to 15, further comprising:
a second transmission gear (13), the second transmission gear (13) is arranged on the power input shaft (8) or the power output shaft (9), the second transmission gear (13) is respectively connected to the longitudinally mounted second electric motor (5) and the transmission (4).

17. The hybrid power system (100) according to any one of claims 1 to 16, further comprising:
a differential (16), the differential (16) has a first bevel gear (161); and
a differential power input shaft (17), the differential power input shaft (17) is provided with a second bevel gear (18), and the first bevel gear (161) meshes with the second bevel gear (18).

18. The hybrid power system (100) according to claim 17, a central axis of the first bevel gear (161) is perpendicular to a central axis of the second bevel gear (18).

19. The hybrid power system (100) according to any one of claims 1 to 18, further comprising:
a transmission (4), the transmission (4) is respectively connected to the longitudinally mounted first electric motor (3), the longitudinally mounted second electric motor (5) and the first coupling apparatus (2);
the hybrid power system (100) is configured to: when in a second state, disconnect the connection between the engine (1) and the longitudinally mounted first electric motor (3) and the connection between the engine (1) and the transmission (4) by means of the first coupling apparatus (2), to control the power of the longitudinally mounted first electric motor (3) and the power of the longitudinally mounted second electric motor (5) to be coupled at the transmission (4) to drive the vehicle.

20. The hybrid power system (100) according to claim 19, the transmission (4) has a plurality of gears:
the hybrid power system (100) is configured to: when in a second state, adjust a transmission ratio of the power of at least the longitudinally mounted first electric motor (3) among the longitudinally mounted first electric motor (3) and the longitudinally mounted second electric motor (5) through different gears of the transmission (4).

21. The hybrid power system (100) according to claim 19, the transmission (4) has a plurality of gears; the hybrid power system (100) is configured to: when in a third state, disconnect the connection between the engine (1) and the longitudinally mounted first electric motor (3) and the connection between the engine (1) and the transmission (4) by means of the first coupling apparatus (2), to control the power of the longitudinally mounted second electric motor (5) to drive the vehicle through the transmission (4), and to adjust the transmission ratio of the power of the longitudinally mounted second electric motor (5) through different gears of the transmission (4).

22. The hybrid power system (100) according to claim 19, the transmission (4) has a plurality of gears:
the hybrid power system (100) is configured to: when in a fourth state, couple the connection between the engine (1) and the longitudinally mounted first electric motor (3) by means of the first coupling apparatus (2), to disconnect the connection between the transmission (4) and the longitudinally mounted first electric motor (3), to control the power of the engine (1) to be transmitted to the longitudinally mounted first electric motor (3) through the first coupling apparatus (2), the longitudinally mounted first electric motor (3) generates electricity and transmits the generated electric energy to the longitudinally mounted second electric motor (5), the power of the longitudinally mounted second electric motor (5) participates in driving through the transmission (4), and the transmission ratio of the power of the longitudinally mounted second electric motor (5) is adjusted through different gears of the transmission (4).

23. The hybrid power system (100) according to claim 19, the transmission (4) has a plurality of gears:
the hybrid power system (100) is configured to: when in a fifth state, couple the connection between the engine (1) and the transmission (4) by means of the first coupling apparatus (2), to control the power of the engine (1) to be transmitted to the transmission (4) through the first coupling apparatus (2), the power of the engine (1) and the power of the longitudinally mounted second electric motor (5) are coupled at the transmission (4) to drive the vehicle, and the transmission ratio of the power of at least the engine (1) among the engine (1) and the longitudinally mounted second electric motor (5) is adjusted through different gears of the transmission (4).

24. The hybrid power system (100) according to claim 19, the hybrid power system (100) is configured to: when in a sixth state, disconnect the connection between the engine (1) and the longitudinally mounted first electric motor (3) and the connection between the engine (1) and the transmission (4) by means of the first coupling apparatus (2), to control a braking force to be transmitted to the longitudinally mounted first electric motor (3) and/or the longitudinally mounted second electric motor (5) through the transmission (4), and the longitudinally mounted first electric motor (3) and/or the longitudinally mounted second electric motor (5) recover energy by generating electricity.

25. A vehicle (1000), comprising a hybrid power system (100) according to any one of claims 1 to 24.
